# EUROPEAN PATENT APPLICATION

(11) **EP 4 661 453 A1**
(43) Date of publication of application: **10.12.2025**
(21) Application number: 24179722.4
(22) Date of filing: 03.06.2024
(51) Int. Cl.: H04W 8/20

(54) **METHOD AND DEVICES FOR UPDATING AND SYNCHRONIZATION OF PROFILE DATA IN MOBILE NETWORKS**

(71) Applicant: Giesecke+Devrient Mobile Security Germany GmbH, 81677 München (DE)
(72) Inventor: Larsson, Thomas, 81677 Munich (DE); Malmberg, Daniel, 81677 Munich (DE)
(74) Representative: LKGLOBAL Lorenz & Kopf Patentanwalt Attorney at Law PartG mbB

(57) **Abstract**

The present invention relates to a method for transferring profile data to a server device, comprising the steps of providing an update request relating to a profile data update affecting the profile data, transferring the profile data from a network management device to the server device in response to receiving of the update request and updating a database entry according to the transferred profile data. The invention further relates to a server device for providing profile data to a user device configured to receive the profile data from a network management device in response to an update request, and to update a database entry according to the transferred profile data. Also disclosed is a network management device for providing profile data to a server device, configured to send an update request to the server device.

## Description

The present invention pertains to the field of telecommunications and network management. Specifically, the present methods and devices relate to efficiently transferring profile data, including eSIM profile data, from network management devices to server devices.

### BACKGROUND OF THE INVENTION

User profiles, specifically eSIM profiles, comprise vital information such as network settings, access permissions, and personalized configurations. Efficient management of corresponding profile data is essential with an increasing number of active SIM profiles and consequently increasing network traffic to maintain devices.

Generally, user profiles are stored and managed within network management systems. However, the need arises for more dynamic and responsive methods to transfer and update user profiles. eSIM technology further accentuates this requirement, as it allows users to easily switch carriers and manage their profiles.

Existing solutions often involve manual interventions, complex procedures, or have limited scalability. Therefore, there is a demand for an improved method that seamlessly transfers profile data while ensuring data integrity, security, and real-time updates.

WO 2016 / 010 387 A1 discloses a method of transmitting and updating modified information to a profile management server (SM-SR) when a modification is made to information stored in an eUICC that is a security module embedded in a terminal. Furthermore, a method of updating a profile management server for enabling profile management using over-the-air technology even when a modification is made to data stored in a unique area (MNO-SD) of each mobile network operator of a profile stored in an eUICC is disclosed. It is however not disclosed that a subscription manager (SM-DP) can be updated using an over-the-air update channel, in particular an update channel for user devices. Updating of the eSIM occurs over the regular channel between the over-the-air server and the terminal. Afterwards, this update is merely communicated to the SM-SR.

WO 2013 / 048 084 A2 discloses a method for managing a profile in an eUICC that enables management information on the profile provided within the eUICC to play an essential role for providing communication and additional services, to be provided to a device existing outside the eUICC. The present invention also relates to an embedded UICC and to a device provided with the embedded UICC for the method. Thereto, only updates of the eUICC according to the known update process between an over-the-air server of the mobile network operator is described. Updating data stored at the SM-DP is not described.

The present invention relates to setting up an eSIM with a an updated eSIM profile. Herein updating the eSIM profile can be part of the setup process or can be done prior to the setup process. The setup process can relate to an initial setup of the device or a setup after a device reset, e.g., a factory reset.

When activating an eSIM profile on a user device, the initial setup may involve establishing a connection between the device and the Subscription Manager Data Preparation Plus (SM-DP+) server. The SM-DP+ address can be a digital equivalent of a SIM card's home address. When activating an eSIM profile, the user device can user the SM-DP+ address to fetch corresponding credentials. The SM-DP+ can provide a download location for the eSIM profile when the user device identity and authenticity are verified by the SM-DP+. With the eSIM profile, the user device can provide a an eSIM service by activating the profile and associating it with the devices identity, e.g., an International Mobile Subscriber Identity - IMSI).

A network management device, e.g. an OTA server, can detect changes (e.g., tariff plan update, roaming configuration) that may require an eSIM profile update. Thereto, an OTA notification can be generated, containing information about the update. The OTA server can prepare an updated eSIM profile package which may include modified profile data and relevant metadata. The OTA server can send the update package to the user device. The user device can receive the package securely over an OTA channel. The user device validates the package integrity and authenticity and subsequently installs the updated eSIM profile. The newly installed profile can be activated, preferably by an eSIM module, e.g., eUICC, such that the user device can seamlessly transition to an updated configuration.

In the field of eSIM data provision, there exists a need for efficiently and reliably providing a user device with an eSIM profile, preferably an up-to-date eSIM profile. The present invention addresses this problem by overcoming shortcomings of known eSIM profile data provisioning.

### SUMMARY OF THE INVENTION

According to a first aspect, the present invention relates to a method for transferring profile data to a server device. The method can comprise the steps of providing an update request comprising information relating to a profile data update affecting the profile data, transferring the profile data from a network management device to the server device in response to receiving of the update request, and updating, preferably by the server device, a database entry according to the transferred profile data. Transferring the profile data can comprise providing updated eSIM profile data from the network management device to the server device. Updating the database entry can comprise receiving the updated eSIM profile by the server device and preferably updating a corresponding database entry with the updated eSIM profile data.

In general, the profile data can comprise information relating to a mobile device, a subscriber of a mobile network, an MNO, a mobile network, and/or a connection to the mobile network. The profile data can comprise data generally stored on a mobile device, preferably in an infrastructure or a device component relating to a connecting process to the mobile network. The device component can be a SIM card, e.g., an eSIM, a UICC, an eUICC, and/or an iUICC or any other future SIM type. Preferably, the profile data relates to a specific profile or parts of a profile to be stored on the SIM card. Thereby, the profile data can enable specific services on the mobile device.

The profile data can be eSIM profile data relating to at least one of the following:
- an eSIM profile for a user device, in particular an eUICC of the user device;
- an eSIM profile template for a user device or a plurality of user devices;
- eSIM profile modification instructions, comprising commands to modify an eSIM profile at the user device, in particular commands to be executed by the user device;
- eSIM application management instructions, comprising commands to modify an appli cation of the user device, in particular an application executed or to be executed by the eUICC; and/or
- eSIM random access memory (RAM) related instructions, comprising commands to modify data in a RAM of the user device, in particular data in a RAM of the eUICC of the user device.

The profile data can be an eUICC information set (EIS) which can preferably comprise all eUICC related information (EID, ICCID, etc.) or a subset thereof.

Transferring profile data can relate to providing profile data for downloading, actively sending profile data, initiating a download of profile data to a user device, in particular via a remotely issued download command, preferably a download command issued by the network management device, initiating a download of profile data in response to polling an profile data provider, preferably the network management device, responding to a download campaign issued by the profile data provider, preferably the network management device, or any combination of the above. The server device can be an eSIM repository server. Specifically, the server device can be implemented as a subscription manager data preparation device, i.e., as a SM-DP or as a SM-DP+. The server device can be configured to serve as a unique identifier for a remote server that facilitates the downloading and management of eSIM profiles. The server device can be a bridge enabling data exchange between a user device and a mobile network operator. The server device can be an eSIM-enabled device configured to enable downloads of profile data, e.g., profile data, and to manage profile data.

The server device can be configured to allocate and manage profile data. The server device can be configured to allocate eSIM profiles to subscribers. It can manage the lifecycle of each eSIM profile, including creating, storing, deleting, and/or updating the respective eSIM profile.

The server device can implement robust security measures to authenticate and authorize access to eSIM profiles, including the use of encryption, secure channels for communication, and compliance with industry-standard protocols. The server device can ensure compatibility with various mobile network operators (MNOs) and user devices, facilitating a seamless user experience, in particular across different networks and/or geographic regions.

The server device can be configured to enable remote provisioning and management of profile data. This can be an SM-DP feature. It allows MNOs to download, enable, disable, or delete profile data on a device, in particular without physical access.

The server device can be configured to customize profile data according to requirements of an MNO, including the provision of operator-specific applications and services.

The server device can be configured to dynamically swap profile data. This can be an SM-DP+ feature. This can achieve the advantage that subscribers can switch between different MNO profiles.

The server device can be configured to execute batch operations for handling multiple eSIM profiles, preferably to modify a plurality of eSIM profiles, i.e., eSIM database entries. This can achieve the advantage of improving efficiency for MNOs managing large numbers of subscribers. The server device can be configured to modify a plurality of eSIM database entries simultaneously.

The server device can be configured to incorporate security features, such as end-to-end encryption and secure routing of profile download requests, to protect against unauthorized access and tampering.

The server device can adhere to relevant regulatory requirements and industry standards, including those set by the GSMA for remote SIM provisioning.

The update request can be at least one of the following:
- an update notification corresponding to an eSIM update campaign issued by an MNO, preferably by the network management device to update-eligible devices;
- an update notification corresponding to an eSIM update request for a specific eSIM pro file, plurality of eSIM profiles, eSIM database entry and/or a plurality of eSIM database entries, preferably by the network management device;
- a request corresponding to polling of the network management device, preferably by the server device to check whether the network management device can provide an update to an existing eSIM database entry stored at the server device.

The user profile update can relate to an eSIM profile update comprising data and/or instructions corresponding to at least one of the following:
- modifying a set of files stored in the eUICC, e.g., replacing with an updated version, de leting an existing file and/or adding a new file;
- modifying parameters, e.g., adding parameters, removing parameters, changing values of existing parameters, in particular parameters stored in the eUICC and/or parameters available to the eUICC;
- providing a new eSIM profile to replace an existing eSIM profile;
- providing an eSIM profile template to create a new eSIM profile according to the eSIM profile template in combination with data available from an existing eSIM profile;

The network management device can be implemented by a server. The network management device can be a remote management and provisioning server, in particular for a mobile network. Specifically, the network management device can be configured as an Over-The-Air (OTA) server providing profile data, in particular eSIM profile data.

The network management device can be configured to transmit data and software updates to user devices such as smartphones, tablets, and embedded modules within Internet of Things (IoT) devices. Preferably, the data is transmitted wirelessly, in particular via a mobile network. The network management device can be configured to facilitate remote management and provisioning of eSIMs, enabling dynamic distribution and updating of eSIM profiles, in particular without the need for physical access to the device.

The network management device can be configured to manage profile data, specifically eSIM profiles. The network management device can be configured to remotely manage profile data, which may include downloading, installing, and/or updating profile data, i.e., eSIM profiles, on devices. This can ensure that users can seamlessly switch between network operators or update their service subscriptions without requiring a physical SIM card swap.

The network management device can be configured to deliver firmware and software updates over the air, allowing devices to stay updated with the latest features, security patches, and performance improvements. This includes updates to the eSIM's operating system and applications.

The network management device can be configured to remotely configure device settings, optimize network selection, and/or manage roaming preferences, ensuring optimal device performance and user experience.

The network management device can be configured to use encryption keys and/or authentication credentials to safeguard transmissions of profile data against unauthorized access and ensuring data integrity during eSIM profile updates.

The network management device can be configured to perform remote diagnostics and monitoring of devices. This can achieve the advantage of identifying and resolving issues related to eSIM functionality and connectivity. The network management device is an integral component of a mobile network telecommunications infrastructure, providing a secure and efficient means of managing eSIM profiles.

The network management device can provide profile data via a physical interface with the user device.

The network management device can comprise a cloud-based service configured to provide an API configured to provide an interface to an eSIM update process for user devices.

The term user device can, for example, be referred to as a user equipment (UE), a user terminal (UT), a wireless terminal, a mobile station (MS), an access terminal (AT), a terminal, a subscriber unit, a subscriber station (SS), a wireless device, a wireless communication device, a wireless transmission/reception unit (WTRU) or a moving node. Embodiments of a user device includes a cellular phone, a smart phone, a personal digital assistant (PDA), a wireless modem, a portable computer, a camera, a home appliance, or a media appliance.

Providing an update request can relate to a device querying another devices for an update, sending a remote update notification from the network management device to the user device, from the network management device to the server device, from the server device to the network management device, from the server device to the user device, from the user device to the network management device and/or from the user device to the server device.

Transferring the profile data can relate to a transfer initiated by the network management device, server device and/or user device. Specifically, the network management device can be a control instance for the update process. Thereby transferring the profile data can be controlled by the network management device according to the parameters and/or conditions of the server device and/or the user device. Transferring the user profile can comprise downloading profile data by the server device and/or the user device. The network management device can provide compatible profile data according to parameters of the user device, specifically of an eUICC. Transferring the profile data can also relate to the network management device sending the profile data to the server device and/or user device such that the transfer is initiated by the network management device.

The network management device can perform the transfer of the profile data according to a predetermined update process to update profile data, specifically an eSIM profile, of the user device. The server device can be configured to take the role of a user device in the predetermined update process such that the network management device provides the profile data to the server device as it would provide the profile data to the user device. For example, the predetermined update process can be a single eSIM profile update configured to update a single eSIM, an eSIM template update configured to update a plurality of eSIMs having a shared characteristic, or an update campaign configured to update all eSIM profiles of a specific MNO.

Updating a database entry can relate to receiving profile data and modifying a stored database entry according to the received profile data. Updating of the database entry can produce an updated database entry comprising an updated eSIM profile which is updated according to update requirements set by the network management device and as provided with the profile data by the network management device. The updated database entry can comprise an eSIM profile which can be provided to a corresponding user device by the server device.

According to an embodiment providing the update request can comprise the step of polling, preferably by the server device, the network management device with the update request. Additionally, the method can further comprise the steps of receiving, preferably by the network management device, the update request, and sending, preferably by the network management device, the profile data to the server device in response to receiving the update request.

This may achieve the advantage, that the server device can actively query for updates. Independently of update functions of the network management device the server device can receive and process updates to its database entries. Thereto, the server device can remove or at least decrease a delay of updated profile data reaching the corresponding user device. Polling can comprise periodically querying the network management device for changes, hoping to receive new or modified profile data. By performing polling by means of the server device the polling process can be centralized to reduce the number of direct update request to network management device, in particular update requests directly from user devices. Polling can be interval based or event based. For example, the server device may receive an update request from another source, e.g., not the network management device, informing the server device of a potential update available at the network management device. The server device may then subsequently poll the network management device for the respect update. This may increase overall scalability of the system.

According to a further embodiment, providing the update request can comprise the step of sending, preferably by the network management device, the update request for the profile data update to at least one update-eligible receiver. The at least one update eligible receiver can comprise the server device. The method can further comprise receiving, preferably by the server device, the update request and subsequently downloading, preferably to the server device, the profile data from the network management device.

The network management device can be configured to manage and distribute updates to user devices maintaining a repository of software updates. The network management device can ensure compatibility with various device models, network protocols, and/or SIM types. For a single SIM update, the network management device may detect when a specific user device requires an update. This trigger can be based on factors such as device type, firmware version, or user request. In campaign scenarios, the network management device can initiate updates for a group of devices simultaneously. Before initiating an update, the network management device can verify the device's identity and ensures proper authorization. Authentication mechanisms may include digital certificates, secure tokens, and/or SIM-based authentication. Authorization checks may consider factors like subscription status, network policies, and/or user preferences. The network management device can authenticate and authorize the server device for receiving an update.

The network management device can select an appropriate delivery method. For example, SMS-based, preferably for single SIM updates. The network management device can send an SMS comprising an update package link. Additionally or alternatively, the network management device can send push notifications. Thereto, update campaigns can leverage push notifications to notify devices about available updates. Devices can retrieve the update package directly from the network management device, in particular via secure connections, like HTTPS.

Upon receiving the update request, the device, i.e., user device and/or server device, can contact the network management device. For single SIM updates, the device downloads the package via SMS or directly (e.g., TLS, HTTPS, etc.). Devices selected via the update campaign can follow the same process, preferably in parallel.

The device may install the update package, ensuring backward compatibility and data integrity. Thereto, the server device may modify a database entry according to the update package and ensure compatibility, in particular based on the initial configuration and/or content of the database entry. In other words, the updated version of the database entry is compatible to the previous database version and the user device(s) this database entry is intended for, such that when the database entry is provided to the user device it provides the function as intended per the updated database entry, respectively the updated profile data as received from the network management device.

The network management device may track update transactions, in particular to determine a progress or success of the update. Due to the server device being always available to receive and process updates, or at least having a substantially higher availability than a typical user device, the server device can provide a high success rate for updates. Thereby, any device receiving a database entry from the server device, has a high probability of receiving the most up-to-date profile data, i.e., the most recent update status available from the network management device. Preferably, the user device may not require a further update from the network management device directly after receiving a database entry, e.g., an eSIM profile, from the server device.

In SIM update campaigns, the network management device may orchestrate the entire update process by grouping devices based on predetermined criteria (e.g., region, device type), scheduling updates (e.g., to minimize network congestion and/or maximize device availability), and/or handling exceptions (e.g., devices offline during the update window). Herein, the server device may provide an interface compatible with the update process of the network management device. Thereto, the server device may receive and process an update like any other device in an update device group.

According to a further embodiment, the method can further comprise the steps of receiving, preferably by the server device, a database entry request for providing the database entry to the user device. The database entry request can be a request from the user device to the server device for providing initial profile data, e.g., an initial eSIM profile to achieve activation. For example, the database entry request can be part of an activation process between the user device and the server device, i.e., a request to receive eSIM profile data. This can constitute a new download from the server device signalling that the corresponding profile is to be activated for the first time. Alternatively, the database entry request can correspond to a re-download of existing profile data. In other words, the profile in the device may be non-existent, lost, damaged, or reset such that the user device requires a re-download of the profile data from the server device. Herein, the server device may provide the original database entry, a database entry that has been updated in the meantime, an updated database entry that is directly updated according to available update data at the server device or send an update request to the network management device to check if an update may be available that can be applied prior to providing the corresponding database entry.

The method can also comprise the step of checking, preferably by the server device, if an update for the requested database entry is available from the network management device in response to receiving the database entry request. Additionally, the method can comprise the step of providing the updated database entry to the user device. The step of updating the database entry according to the profile data can be performed prior to providing the updated database entry to the user device.

The server device can be configured to receive and directly process profile data such that an updated database entry can be generated in real-time, specifically to provide an updated database entry, when a user device requests a database entry. Thereto, the database entry can be received by an intermediary, e.g., a profile management server, between the user device and the server device. The server device may handle profile creation, delivery and updating, while the profile management server may ensure secure communication during profile delivery between the server device and the user device.

Receiving a database entry request can relate to an eSIM profile request, i.e. a request for a dataset comprising a combination of a file structure, data, and/or applications present on an eUICC. When enabled, a profile may allow access to a specific mobile network infrastructure.

The database entry request can be a request to receive an initial eSIM profile. Herein, the initial eSIM profile can already be an updated eSIM profile.

According to a further embodiment, the method can also comprise the steps of determining, by the server device, if a version of the database entry at the server device corresponds to a version of this database entry at the network management device, and sending, preferably by the server device, the update request to the network management device, when a version mismatch is determined.

The method can involve determining whether a version mismatch exists between a database entry at the server device and a corresponding entry or update sequence at the network management device. Upon detecting such a mismatch, the server device can send an update request to the network management device. This can enhance system reliability, reduce operational errors, and streamlines network management processes.

The server device can continuously monitor its database entries and compare the version of a specific entry with the corresponding entry in the network management device or updates available at the network management device. Thereto, the server device can be configured to determine whether an available update is already applied to the corresponding database entry. The server device can generate an update request to the network management device when a mismatched entry is detected. Upon receiving the update request, the network management device which may confirm a necessary update. The network management device can initiate corresponding corrective actions, i.e., providing profile data to update the entry at the server device. Thereby, an automated synchronization can be achieved ensuring consistent versions across the server device, the network management device and devices receiving data from the server device, e.g., devices in initial setup and/or devices after a reset.

Version mismatches can trigger immediate notifications, allowing prompt corrective actions. The secure channel between server device and user device in combination with the updated database entry at the server device achieves an enhanced security of providing updated database entries. Furthermore, the operational efficiency can be increased due to reduced downtime and streamlined network management processes. Specifically, the uncertainty of an update process between user device and network management device can be circumvented by including the updates already in the initial transfer from the server device to the user device. Network traffic can be reduced as updates can already be bundled at the server device.

The method can comprise the step of providing an initial version of the database entry, preferably when the user device indicates an incompatibility of the provided updated database entry. The method can further comprise the step of providing, preferably by the server device, an updated database entry to the user device, wherein the updated database entry comprises profile data received by the server device from the network management device.

According to a second aspect, the present invention relates to a server device for providing profile data to a user device. The server device can be configured to receive the profile data from a network management device in response to an update request comprising information relating to an eSIM profile update. Also, the server device can be configured to update a database entry according to the transferred profile data.

Generally, the process of supplying eSIM profiles to the server device can involve several steps to ensure secure and efficient management of eSIMs. An eSIM profile can be created directly by the MNO or by the server device according to instructions received by the MNO. The eSIM profile can be securely generated and encrypted to ensure its integrity. The server device can be assigned a unique identifier, e.g., an SM-DP(+) address.

The present invention establishes a standard for data provisioning and specifically updating to the server device, e.g., the SM-DP(+), preferably by means of the network management device, e.g., the OTA server. An MNO may securely transmit eSIM profiles to the respective server devices and may provide updates to the eSIM profiles via the OTA server. The SM-DP(+) servers store the eSIM profiles and ensure their availability for activation requests. The server device according to the invention as capable of updating the stored eSIM profiles by requesting and/or receiving update requests and subsequently also the corresponding update from an update source, e.g., the network management device, specifically an OTA server. The server device may employ a standard interface to connect to the network management device.

A database entry may be an eSIM profile and thereto suitable to be directly supplied to the user device. Alternatively, the database entry may comprise the initial profile data and subsequent updated profile data. The server device can be configured to generate a database entry to be supplied to the user device according to the stored data. In other words, the server device may not store the requested eSIM profile directly but may store the initial eSIM profile and any subsequent update data pertaining to this eSIM profile. Upon receiving a request to provide the eSIM profile, the server device may generate the eSIM profile according to the initial eSIM profile and the stored update data to generate an up-to-date eSIM profile. This up-to-date eSIM profile can then be provided to the user device instead of the initial eSIM profile.

According to a further embodiment, the server device can be configured to poll the network management device for a profile data update. This achieves the advantage that the server device can actively try to receive an update from the network management device. The server device can announce its presence, update capability, database entry version, update requirements, update request to the network management device. The network management device may confirm a version of the database entry, in particular to indicate that the database entry at the server device is in sync or out of sync with the database entry version or a corresponding update or update sequence at the network management device. Polling the network management device can relate to querying the network management device if an update is available and/or a current update campaign is in progress for the corresponding eSIM profile to be delivered to the user device, i.e., the corresponding database entry at the server device. The network management device can be configured to provide an update notification to the server device in response to being queried by the server device. Subsequently, the described update process can follow. In other words, the request from the server device may trigger the update process, but the following update process can be performed as if the network management device initiated the update process. The server device may hold providing a current database entry, when an update notification is received in response to the update request sent to the network management device.

The network management device may register the server device as a user device having an activated profile according to the corresponding database entry of the server device. Polling for the profile data update may prompt the network management device to provide a corresponding update to the server device. A poll for the profile data can be initiated by a user device requesting a database entry from the server device.

Configuring the server device to actively synchronize profile data from profiles and update campaigns of the network management device can increase the percentage of up-to-date devices significantly since updates from the network management device to the user device can be reduced or avoided altogether. Specifically, an eSIM profile acquired from the server device can be directly fully functional and may not require further updates from the network management device at the point of installing the eSIM profile from the server device.

According to a further beneficial embodiment, the server device can be configured to receive a database entry request for providing the database entry to a user device. The server device can also be configured to check if an update for the requested database entry is available from the network management device in response to receiving the database entry request. Further, the server device can be configured to provide the updated database entry to the user device. The server device can be configured to update the database entry according to the profile data prior to providing the updated database entry to the user device.

The database entry request can be an initial eSIM profile request when a device is initially activated or reactivated after a device reset. When receiving the request, the server device may generate the requested eSIM profile according to data available at the server device. Additionally or alternatively, the server device can generate an eSIM profile according to data received from the network management device. The server device may check with the network management device for instructions and/or modifications to the corresponding profile data before providing an eSIM profile to the user device. The network management device can provide instructions to modify an existing profile stored at the server device or provide profile data according to an auto-provisioning function. The auto-provisioning function can comprise providing a complete up-to-date profile data, e.g. eSIM profile, suitable to be directly provided to the user device. The server device achieves the advantage that this profile can be directly provided to the user device as an initial profile, i.e., without the user device being activated with an initial profile.

A requested eSIM profile may not be directly stored in the database of the server device. Instead, the database may comprise profile data and the server device can be configured to generate the eSIM profile according to the profile data when the request for the eSIM profile is received. The eSIM profile can be generated based on initial profile data, and preferably also updated profile data or a sequence of updates to the profile data. The generated eSIM profile may be stored as the database entry and provided to the user device.

According to a further embodiment, the server device can be configured to provide an interface to the network management device corresponding to a user device interface such that a profile update provided by the network management device intended for the user device is also provided to the server device.

The interface can be configured to allow a remote SIM provisioning (RSP) connection to the network management device. Thereby, the server device can provide a mechanism to manage eSIM profiles remotely. For example, the server device can provide an environment relating to the corresponding eSIM profile to be updated. To the network management device, this environment can be indistinguishable from the real user device the eSIM profile corresponds to. Thereby, the network management device can perform an update as it would on the user device. The server device can be configured to store the updated eSIM profile, i.e., the updated profile data, as a corresponding database entry. The interaction between server device and network management device can result in an updated database entry without any manual intervention. This process can adhere to a standardized interface, e.g., an ES6 interface or other iterations of this standard interface. The server device can be configured to perform the standard requirements relating to authentication, validation and testing of the updated profile data prior to storing the updated profile data as a database entry.

According to another advantageous embodiment the server device can be configured to connect to a remote file management (RFM) interface. The profile data can comprise at least one of:
eSIM profile modification instructions,
eSIM application management instructions, and
eSIM RAM related instructions.

The server device can be configured to modify a corresponding database entry according to the profile data. This achieves the advantage that the server device can provide a database entry to the user device suitable for initial installation and activation, i.e., the updated database entry can be handled by the user device like an initial eSIM profile. The RFM interface can be part of the network management device.

The eSIM profile modification instructions can relate to commands for modifying existing profile data, e.g., an existing eSIM profile. Thereby, the eSIM profile can be adapted to new requirements of the MNO or subscription changes of the user. The eSIM application management instructions can relate to commands for modifying executable functions related to the eSIM profile, respectively associated eSIM applications. Existing applications can be modified, new applications can be installed, and/or existing functions can be deleted. The eSIM RAM related instructions can be related to data stored in a RAM module accessible by the eUICC. Thereto, the database entry can emulate a corresponding RAM module, and/or can store a corresponding RAM image comprising the related modifications.

According to a third aspect, the present invention relates to a network management device for providing profile data to a server device. The network management device can be configured to send an update request for a profile data update, preferably to at least one update-eligible receiver. The at least one update eligible receiver can comprise the server device.

In a further beneficial embodiment, the network management device is configured to receive the update request. Further, the network management device can be configured to initiate transferring the profile data to the server device in response to receiving the update request. Preferably, initiating the transfer can comprise sending the profile data to the server device. Transferring the profile data can comprise the steps of providing the update notification, transferring the profile data, and/or updating the database entry according to the transferred profile data.

According to a fourth aspect, the present invention relates to a computer program product, comprising computer-readable medium bearing instructions preferably executable by a network device capable of participating in a communication network. The instructions, preferably when executed by the network device, can cause the network device to perform steps of the method according to any embodiment of the first aspect of the invention.

According to a fifth aspect, the present invention relates to a computer-readable data carrier, comprising a non-transitory computer-readable medium. This medium can have stored thereon a computer program according to the fourth aspect of the invention. The computer program, when executed by a network device, may cause the network device to perform the method according to any embodiment of the first aspect of the invention.

According to a sixth aspect, the present invention relates to a mobile network system, comprising a server device according to any embodiment of the second aspect of the invention, a network management device according to any embodiment of the third aspect of the invention, and/or a plurality of user devices. The network management device can be configured to provide profile data to the server device and to an activated user device of the plurality of user devices. The user device can be configured to activate according to initial profile data received from the server device. The server device can be configured to provide an up-to-date version of the profile data as the initial profile data to the user device. The up-to-date version of the profile data can correspond to a version of the profile data for the user device available at the network management device and/or correspond to the result of a plurality of updates to profile data available at the network management device.

The version of the profile data available at the network management device can correspond to a specific update or update instructions for an eSIM profile to bring an eSIM profile installed and activated on a user device to an updated version of the eSIM profile. The server device can achieve the advantage that the data available at the server device to store or generate corresponding eSIM profiles is synchronized with the data available from a network management device. At the time instance of delivering profile data, e.g., an eSIM profile, to the user device the provided profile data may correspond to an update state available at the network management device for the corresponding profile. Thereby, no additional updates need to be received from the network management device until updates subsequent to the initial profile transfer are provided. New updates may then be received by the user device from the network management device.

The server device can be configured to provide profile data, specifically updated profile data, to an inactive user device, meaning that the eSIM functionality of the user device has not been activated.

The server device can comprise a receiver interface, preferably an API, e.g. a standardized interface for receiving updates from the network management device. The interface can be configured to be recognized by the network management device as update eligible.

The present disclosure also relates to a user device, preferably with eSIM capability. The user device comprises an eSIM interface configured to send a database entry request, preferably an eSIM profile request, to a server device, preferably an eSIM repository server. The server device can be configured for providing the requested database entry to the user device. The user device can further be configured to receive an updated database entry according to the database entry request, wherein the updated database entry matches a version of the database entry available at a network management device.

The user device is configured to request an eSIM profile from the server device and accept a received updated eSIM profile as the requested initial eSIM profile. Thereto the user device is configured to accept an updated eSIM profile as an initial eSIM profile to activate a subscriber function.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
FIG. 1 shows a schematic representation of the method according to an embodiment of the present invention; and
FIG. 2 shows a schematic representation of the system according to an embodiment of the present invention; and
FIG. 3 shows a schematic representation of the system according to an embodiment of the present invention.

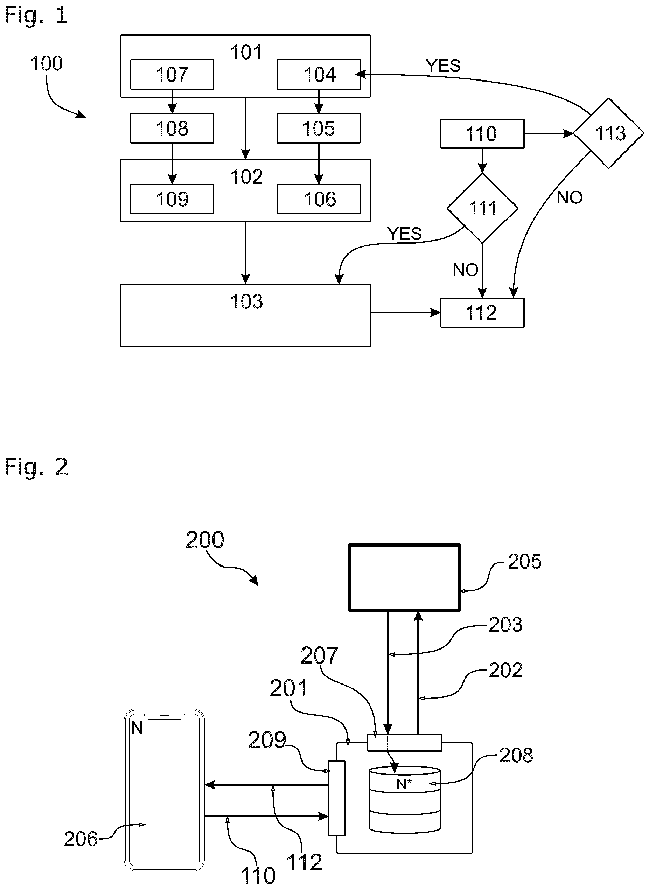

FIG. 1 shows a schematic representation of the method 100 for transferring profile data to a server device according to an embodiment of the present invention.

The method 100 comprises an update request generation 101. This notification contains crucial information related to a profile data update that affects the profile data. The update request 101 serves as a trigger for subsequent actions. Additionally, the method 100 comprises polling the network management device 104. The server device can actively poll the network management device to check for any pending updates. This polling mechanism ensures timely communication between the server and the network management system. In response to the polling by the server device, the method can comprise receiving 105 the update request by the network management device. This step ensures that the network management system is aware of the impending profile data update. Alternatively, the update request can also be send 107 by the network management device. Herein, receiving 108 of the update request is performed by the server device. The server device can be the sole receiver or part of a plurality of devices that are eligible to receive an update and thereto are sent the update request.

Following the notification process, a profile data transfer (Step 102) can be initiated and executed. In response to the update request, the network management device can send the profile data to the server device. This transfer ensures that the most up-to-date user profile information is available for further processing. The transfer can be directed to the server device such that downloading 109 of the profile data from the network management device is initiated by the server device. Also, the transfer can be initiated by the network management device by sending 106 the profile data to the server device.

Further, the method can comprise a database entry update (Step 103). The server device takes responsibility for updating the database entry based on the transferred profile data. Alternatively the network management device may control the update process at the server device, respectively the server device may provide an environment for the network management device to perform the update. Specifically, the server device may provide a mobile device environment relating to the database entry to be updated, in which the network management device can perform the update. The updated profile data can then be stored in an updated database entry. Alternatively, the network management device may modify the database entry directly. This step ensures that the database accurately reflects the latest user information.

An update availability check (Step 106) can be performed. Preferably the server device can check if an update for the requested database entry is available from the network management device. If an update exists, the server device proceeds to providing an updated database entry (Step 107).

Update checks can either be initiated by the network management device, i.e., step 107, or the server device, i.e., step 104. The update check by the server device can be triggered by a request for a database entry by a user device. Any provision of a database entry by the server device can trigger an update check with the network management device. Alternatively, the server device may be aware of an update at the network management device but may only download and process the update when a request for the corresponding database entry is made by a user device. Also, the network management device may instruct the server device to provide a database entry to the user device. This can achieve a remote setup of a user device without the user device being activated beforehand.

The updating of a database entry at the server device may also affect the provision of a database entry by the server device. Specifically, the server device may receive 110 a database entry request to provide a specific database entry. In response thereto, the server device may check 111 if an update for the requested database entry is available, preferably available from the network management device. According to the data available at the server device and/or a profile data update available at the network management device, the update check can indicate that an update is available (YES) or that no update is available (NO).

When the server device is able to acquire update information, e.g. in form of a response to its polling the network management device and/or in noticing an active update campaign or in having previously received an update request pertaining to the requested database entry, the server device may update the corresponding database entry. Thus, the server device can provide 112 an updated database entry. Preferably, updating 103 of the database entry is performed prior to providing 112 the updated database entry. The update process can involve the complete process of polling 104 the network management device, receiving 105 the update request by the network management device, sending 106 the profile data and then updating 103 the database entry.

The method can comprise a version check (Step 113). To maintain consistency, the server device can compare the version of the database entry at its end with the version at the network management device. If a version mismatch is detected, further action is warranted, e.g., initiating the update process, retrieving an update and/or responding to a specific singular update or update campaign.

The method can comprise the step of sending 114 the update request by the server device in response to determining 113 a version mismatch: When a version mismatch occurs, the server device can send an update request back to the network management device. This notification can prompt the network management system to take corrective measures, such as providing an update for the corresponding profile data. Thereby, the server device can generate an updated database entry according to the provided profile data.

Subsequently, the server device can provide the updated database entry to the user device. This ensures that the user has access to the most recent profile data, preferably upon initialization of the user device.

FIG. 2 shows a schematic representation of the system according to an embodiment of the present invention, specifically relating to the server device 201 configuration and interaction with the network management device 205 and the user device 206.

The figure illustrates the server device 201 in communication with a network management device 205. The server device 201 is depicted as being capable of performing several functions: The server device 201 can poll the network management device 205 for updates to profile data 203, ensuring that the server device 201 maintains the latest information.

The server device 201 can provide an interface 207 to the network management device 205 to handle and receive update requests and/or to enable an update process resulting in an updated database entry, respectively receiving profile data 203 enabling the server device 201 to generate an updated database entry N* based on the profile data 203. Alternatively, the server device may generate the updated database entry N* based on an initial or previous database entry N in combination with the profile data 203.

By means of the interface 207, the server device 201 can ensure that any profile update intended for the user device 206, preferably any user device in the supervision of the MNO, respectively the network management device, is also received by the server device 201.

The server device 201, specifically the interface 207 can be equipped to connect to a remote file management (RFM) interface, preferably of the network management device 205. The profile data 203 includes, but is not limited to, eSIM profile modification instructions, eSIM application management instructions, and eSIM configuration instructions. The server device 201 utilizes this data to modify the corresponding database entry 204 as needed.

This configuration enables the server device 201 to act as an intermediary, ensuring that the user device 206 receives the most current and accurate data, while also providing the flexibility to manage eSIM profiles effectively. Specifically, the secure channel infrastructure established between the server device 201 and the user device 206 can be used to transfer an updated database entry N* to the user device 206. Thereto, the server device can comprise a device interface 209configured to establish a secure connection to a user device. Preferably, the server device 201 can rely on its established features relating to its function as an SM-DP(+).

Upon receiving 110 a request for a database entry 204 from a user device 206, the server device 201 checks 112 with the network management device 205 for any available update to the profile data corresponding to the requested database entry 204. If an update is available, the server device 201 updates the database entry 204 based on the profile data 203, preferably before providing it to the user device 206.

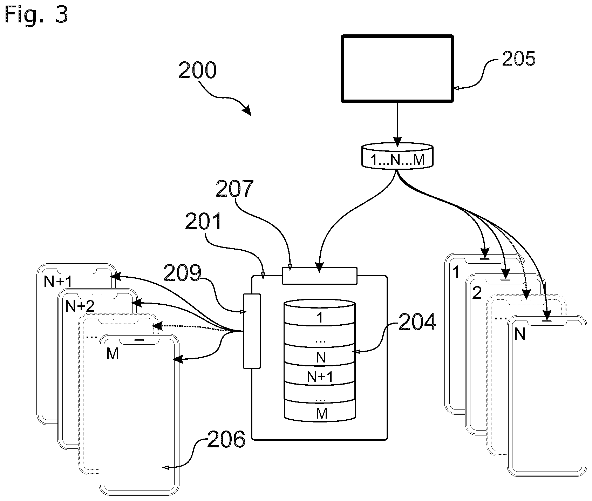

Fig. 3 shows a further schematic representation of the system according to an embodiment of the present invention, specifically relating to the handling of update campaigns issued by the network management device 205. The network management device 205 may provide profile data 203, which relates to a plurality of devices 1 to M, i.e., an update template and/or update campaign. This campaign can be initiated by an update request to the update eligible devices 1 to M. Herein, the server device 201 may be registered with the network management device to receive any update that is provided, such that also the server device 201 will receive the profile data 203 as part of the initialized update. The update campaign may comprise individualized profile data 203 for each device, such that the network management device will provide a specific profile data download for each device. Alternatively, the update can be generic such that all devices can receive the same update. According to a further alternative an update template can be provided which can be generic but may require the integration of individual data on the specific device resulting in device or user specific profile data at the device once the update according to the template is complete.

The profile data provided by the network management device in the update campaign can relate to active devices 1 to N and inactive devices N+1 to M. The grouping is arbitrary and only chosen to depict two groups of user devices having a different status. An activated device can be defined by having previously received a first database entry transfer from the server device and subsequently having a successfully activated eSIM profile enabling mobile network access of the user device. An inactive device can be defined by not having previously received a first database entry transfer from the server device and consequently not having an activated eSIM profile. Alternatively, an inactive device can be a device reset to its factory settings and in the process having lost its activation status or having lost the profile data necessary for its activation. In other words, inactive devices are currently not registered to the mobile network and inaccessible by the network management device.

The server device 201 can be configured to store the profile data 203 provided with the update campaign and to create an updated database entry N* or, if the database entry does not exist, create an initial version of the database entry. The creation of the updated database entry N*, respectively the initial version of database entry may be conditional to a database entry request by the user device 206. Thereby, the server device 201 may store all data necessary to create the requested database entry but may not generate the database entry until it is requested. This can increase processing and/or storage efficiency. In other words, the server device may store update information and only generate eSIM profiles for delivery to a user device when it is requested.

Relating to updates issued by the network management device 205, the server device 201 can act as a mirror to any user device 206 registered to the network management device 205, respectively activated with the network management device 205, such that any update issued by the network management device to a registered user device is also received by the server device 201. Correspondingly, the server device may receive any update request issued by the network management device. Alternatively, the network management device and server device may specify a predetermined set of user device to which the server device 201 may hold profile data and correspondingly updated profile data.

## Claims

1. A method (100) for transferring profile data, such as an eSIM profile, to a server device (201), comprising the steps of
providing (101) an update request (202) comprising information relating to a profile data update affecting the profile data (203);
transferring (102) the profile data (203) from a network management device (205), such as a mobile network management and provisioning system, to the server device (201) in response to receiving of the update request (202);
updating (103), by the server device (201), a database entry (204) according to the transferred profile data (203).

2. The method (100) according to claim 1,
wherein providing (101) the update request comprises
polling (104), by the server device (201), the network management device (205) with the update request (202),
wherein the method (100) further comprises the step of
receiving (105), by the network management device (205), the update request (202), and wherein transferring (102) the profile data (203) comprises
sending (106), by the network management device (205), the profile data (203) to the server device (201) in response to receiving the update request (202).

3. The method (100) according to claim 1,
wherein providing (101) the update request comprises
sending (107), by the network management device (205), the update request (202) for the profile data update to at least one update-eligible receiver, wherein the at least one update eligible receiver comprises the server device (201),
wherein the method (100) further comprises
receiving (108), by the server device (202), the update request and
wherein transferring (102) the profile data (203) comprises
downloading (109), to the server device (201), the profile data (203) from the network management device (203) in response to receiving (108) the update request (202).

4. The method (100) according to any of the preceding claims, comprising the steps of
receiving (110), by the server device (201), a database entry request (208) for providing the database entry (204) to a user device (206),
checking (111), by the server device (201), if an update for the requested database entry (204) is available from the network management device (205) in response to receiving (110) the database entry request; and
providing (112) the updated database entry (208) to the user device (206);
wherein updating (103) the database entry (204) according to the profile data (203) is performed prior to providing (112) the updated database entry to the user device (206).

5. The method (100) according to any of the preceding claims, comprising the steps of
determining (113), by the server device (201), if a version of the database entry (204) at the server device corresponds to a version of this database entry (204) at the network management device (205),
wherein polling (104), by the server device (201), the network management device (205) with the update request (202) is performed when a version mismatch is determined.

6. A server device (201) for providing profile data (203) to a user device (206), configured to:
receive the profile data (203) from a network management device (205) in response to an update request (202) comprising information relating to a profile data update, and
update a database entry (204) according to the transferred profile data (203).

7. The server device (201) according to claim 6, configured to poll the network management device (205) for a profile data update.

8. The server device (201) according to any one of claim 6 or 7, configured to:
receive a database entry request for providing the database entry (204) to a user device (206);
check if an update for the requested database entry (204) is available from the network management device (205) in response to receiving the database entry request; and
provide the updated database entry to the user device (206),
and wherein the server device (201) is configured to update the database entry (204) according to the profile data (203) prior to providing the updated database entry to the user device (206).

9. The server device (201) according to any one of claims 6 to 8,
configured to provide an interface (207) to the network management device (205) corresponding to a user device interface such that a profile update provided by the network management device (205) intended for the user device (206) is also provided to the server device (201).

10. The server device (201) according to any one of claims 6 to 9,
configured to connect to a remote file management (RFM) interface, and wherein the profile data (203) comprises at least one of:
eSIM profile modification instructions,
eSIM application management instructions, and
eSIM configuration instructions, and
wherein the server device (201) is configured to modify a corresponding database entry according to the profile data (203).

11. A network management device (205) for providing profile data to a server device (201), configured to send an update request for a profile data update to at least one update-eligible receiver, wherein the at least one update eligible receiver comprises a server device (201).

12. The network management device (205) according to claim 11, configured to:
receive the update request, and
initiate transferring the profile data to the server device (201) in response to receiving the update request.

13. A computer program product, comprising:
computer-readable medium bearing instructions executable by a network device capable of participating in a communication network,
wherein the instructions, when executed by the network device, cause the network device to perform steps of the method according to any one of claims 1 to 5.

14. A computer-readable data carrier, comprising a non-transitory computer-readable medium; wherein the medium has stored thereon a computer program according to claim 13; wherein the computer program, when executed by a network device, causes the network device to perform the method according to any one of claims 1 to 5.

15. A mobile network system (200), comprising
a server device (201) according to any one of the claims 6 to 10,
a network management device (205) according to any one of the claims 11 or 12, and
a plurality of user devices (206),
wherein the network management device (205) is configured to provide profile data to the server device (201) and to an activated user device (206) of the plurality of user devices, wherein user device (206) is configured to activate according to initial profile data received from the server device (201),
wherein the server device (201) is configured to provide an up to date version of the profile data as the initial profile data to the user device (206), and
wherein the up to date version of the profile data corresponds to a version of the profile data for the user device (206) available at the network management device (205) or corresponds to the result of a plurality of updates to profile data available at the network management device (205).
